# EUROPÄISCHE PATENTSCHRIFT

(11) **EP 0 590 187 B1**
(45) Veröffentlichungstag und Bekanntmachung des Hinweises auf die Patenterteilung: **29.11.1995**
(21) Anmeldenummer: 92116705.2
(22) Anmeldetag: 30.09.1992
(51) Int. Cl.: G01F 1/00, G01F 1/80, G01F 1/82

(54) **Vorrichtung zum Messen eines Massestroms**
Device for mass flow measurement
Dispositif de mesure d'un débit massique

(43) Veröffentlichungstag der Anmeldung: 06.04.1994
(73) Patentinhaber: CARL SCHENCK AG, D-64293 Darmstadt (DE)
(72) Erfinder: Törner, Ludger, Ing. grad., W-6116 Eppertshausen (DE)

(56) Entgegenhaltungen:
- EP-A- 0 196 440
- DE-A- 3 346 145
- GB-A- 2 127 549
- PATENT ABSTRACTS OF JAPAN vol. 11, no. 328 (P-629)27. Oktober 1987 & JP-A-62 112 023

## Beschreibung

Die Erfindung betrifft eine Vorrichtung zum Messen eines Massestromes, insbesondere eines Schüttgüterstromes nach dem Coriolis-Meßprinzip gemäß dem Oberbegriff des Patentanspruchs 1.

Zur genauen Gewichtserfassung von Materialströmen wird die wirksame Trägheitskraft (Corioliskraft), welche bei der Kopplung eines bewegten Masseteilchens mit einem sich drehenden Bezugskörper auftritt, zur Massenbestimmung ausgenutzt. Hierzu wird der Materialstrom auf eine mit radialen Leitschaufeln versehene Scheibe aufgebracht, worauf das Schüttgut im wesentlichen senkrecht zur Rotationsachse der Scheibe weggeschleudert wird. Das Drehmoment der mit konstanter Drehzahl rotierenden Scheibe ändert sich entsprechend der Corioliskraft, wobei die Drehmomentänderung proportional ist.

Eine derartige Meßvorrichtung zur kontinuierlichen Gewichtserfassung von Materialströmen ist aus der DE-OS 33 46 145 vorbekannt. Bei dieser Meßvorrichtung wird ein mit konstanter Drehzahl rotierendes Flügelrad von einem unmittelbar darüber angeordneten Elektromotor angetrieben, der in einem stationären Gehäuse pendelnd gelagert ist. Dabei ist am Antriebsmotor ein Hebelarm angebracht, mit dem sich der drehbar gelagerte Motor auf einen mit dem Gehäuse verbundenen Kraftaufnehmer abstützt. Dadurch wird das Reaktionsdrehmoment der auftretenden Verdrehung des Motorgehäuses auf den Kraftaufnehmer übertragen. Die aufgenommene Kraft wird unter Berücksichtigung des Hebelarms in ein Drehmoment umgerechnet, was genau dem Massendurchsatz proportional ist. Bei dieser Vorrichtung ist der pendelnd aufgehängte Motor gegenüber dem stationären Gehäuse in Kugellagern geführt, die durch ihre Reibung die Drehmomentmessung verfälschen können. Auch wenn man diese Lagerreibung durch eine Leerlaufmessung ermittelt und entsprechend berücksichtigt, treten im Lastbetrieb unterschiedliche Lagerreibungen dadurch auf, daß bei einem einseitig abgestützten Motor an den Lagerwänden durch eine ungleichmäßige Schmierung unbestimmbare Reibungen auftreten, die das Meßergebnis verfälschen.

Der Erfindung liegt deshalb die Aufgabe zugrunde, eine Meßvorrichtung der eingangs genannten Art so zu verbessern, daß durch einfache Mittel die Meßgenauigkeit erhöht wird.

Diese Aufgabe wird durch die im Patentanspruch 1 angegebene Erfindung gelöst. Weiterbildungen und vorteilhafte Ausbildungsbeispiele der Erfindung sind in den Unteransprüchen angegeben.

Die Erfindung hat den Vorteil, daß fast keine Reibungskräfte die Drehmomentenmessung ungünstig beeinflussen können, da der Antriebsmotor sich nicht auf reibungsbehaftete Lager gegenüber dem Gehäuse abstützt, sondern ausschließlich an Federelementen hängt. Diese Felderelemente sind vertikal in Hängerichtung biegesteif und in Drehrichtung biegeweich, so daß das erzeugte Antriebsmoment ohne Reibungsverluste auf die Kraftmeßelemente übertragen wird.

Weiterhin bietet die Erfindung noch den Vorteil, daß radiale Verschiebungen der Antriebswelle gegenüber der theoretischen Drehachse keine Auswirkungen auf das Meßergebnis haben können, da sich dies durch die symmetrische Anordnung der Meßelemente ausgleicht. Da das zu ermittelnde Drehmoment aus der gemessenen Kraft und der Entfernung zwischen der theoretischen Drehachse und dem Krafteinleitungspunkt an den Kraftmeßelementen errechnet wird, gleichen sich radiale Verschiebungen der Antriebsachse bei den symmetrisch angeordneten Kraftmeßelementen aus. Dies wird dadurch erreicht, daß z. B. bei zwei symmetrisch zur Drehachse angeordneten Kraftmeßzellen diese sich auf einer Ebene gegenüberliegen und somit einen Hebelarm um die Drehachse bilden. Da sich die Gesamthebellänge nicht ändert, wird durch die Verschiebung der eine Hebelarm lediglich um die gleiche Strecke kürzer als sich der andere verlängert, so daß dadurch ein Ausgleich entsteht.

Die Erfindung wird anhand eines Ausführungsbeispiels, das in der Zeichnung dargestellt ist, näher erläutert. Es zeigen:
- Fig. 1:: eine Vorrichtung zur Messung des Massestromes;
- Fig. 2:: die Seitenansicht eines Torsionsgelenks und
- Fig. 3:: die Draufsicht eines Torsionsgelenks.

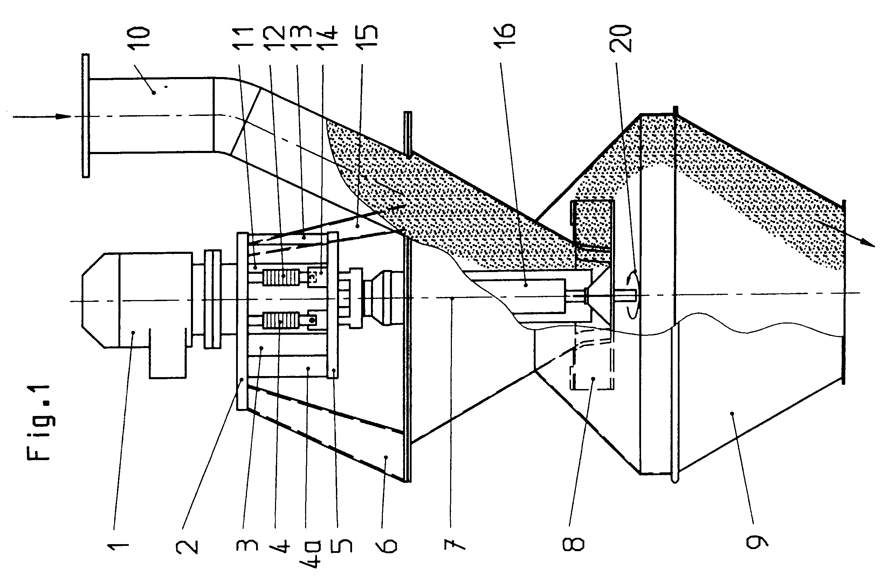

Die Fig. 1 der Zeichnung zeigt eine Vorrichtung zum Messen eines Schüttgutstromes, der auf ein mit konstanter Geschwindigkeit angetriebenes Flügelrad auftrifft, wobei durch ein Torsionsgelenk dessen Antriebsmoment gemessen wird, das proportional der Förderstärke ist.

Die Meßvorrichtung ist vertikal angeordnet und besteht aus einem Antriebsmotor 1, der sich antriebsseitig auf ein Torsionsgelenk 3 abstützt. Das Torsionsgelenk 3 besteht aus zwei sich parallel horizontal gegenüberliegenden, etwa ringförmigen Metallteilen, die vertikal mit drei Federelementen 4a, 13, 22 verbunden sind. Damit stellen die Federelemente 4a, 13, 22 drei Blattfedern dar, die so mit den beiden ringförmigen Metallteilen 2, 5 verbunden sind, daß sie vertikal biegesteif und in Drehrichtung 20 biegeweich sind. Dadurch lassen sich die beiden ringförmigen Metallteile 2, 5 in Drehrichtung 20 gegeneinander verdrehen. Wobei das obere ringförmige Metallteil 2 ein stationäres Teil darstellt, da es über eine Befestigungsstütze 6, 15 mit dem Gehäuse drehfest verbunden ist. Hingegen stellt das untere ringförmige Metallteil 5 ein Krafteinleitungsteil dar, mit dem der Antriebsmotor fest verbunden ist. Der Antriebsmotor 1 stützt sich dabei mit einem Verlängerungsstutzen 11 auf dieses Krafteinleitungsteil 5 ab und ist mit diesem fest verschraubt.

Der stationäre Teil 2 des Torsionsgelenkes 3 enthält eine Bohrung 19, durch die der Verlängerungsstutzen 11 hindurchgeführt ist, ohne eine Verbindung mit diesem herzustellen. Zwischen dem stationären Teil 2 und dem Krafteinleitungsteil 5 des Torsionsgelenkes 3 sind zwei Kraftmeßelemente 4, 12 zur Drehmomentmessung angebracht. Dabei sind die beiden Kraftmeßelemente 4 und 12 parallel und symmetrisch zur Drehachse 7 angeordnet. Beide Kraftmeßelemente 4, 12 sind fest an dem stationären Teil 2 angeschraubt und stützen sich in Drehrichtung je auf einem Anschlagflansch 14, der am Krafteinleitungsteil 5 befestigt ist, ab.

Vom Motor 1 verläuft axial nach unten eine Antriebswelle 16, deren Mittenachse die Drehachse 7 darstellt. Am unteren Teil der Antriebswelle 16 ist ein Flügelrad 8 befestigt, auf das durch einen seitlich vertikal verlaufenden Einfüllstutzen 10 der Schüttgüterstrom im Zentrum auf das Flügelrad 8 aufgegeben wird. Durch das vom Motor 1 angetriebene Flügelrad 8 wird der Schüttgüterstrom horizontal nach außen umgelenkt und gelangt danach in den darunterliegenden Austragsbehälter 9.

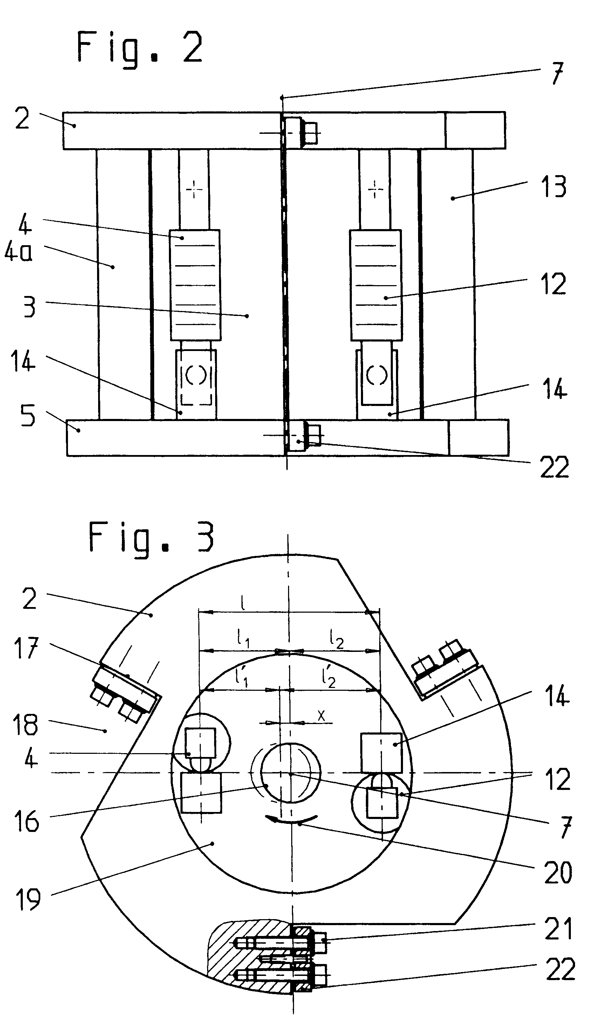

In Fig. 2 der Zeichnung ist das Torsionsgelenk 3 in Seitenansicht näher dargestellt. Dabei besteht dies im wesentlichen aus einem horizontal angeordneten stationären Teil 2 und einem parallel darunter beabstandeten Krafteinleitungsteil 5, die durch drei vertikal angeordnete Blattfedern 4a, 22, 13 miteinander fest verbunden sind.

Symmetrisch zur Mittenachse 7 sind zwei Kraftmeßelemente 4, 12 axial angeordnet, die als Biegebalken ausgebildet sind. Die Biegebalken 4, 12 sind am stationären Teil 2 durch eine Schraubverbindung befestigt. Den Biegebalken gegenüberliegend sind an dem Krafteinleitungsteil 5 des Torsionsgelenks 3 je ein Anschlagflansch 14 befestigt, auf den sich die Biegebalken 4, 12 in Drehrichtung abstützen und die zur Drehmomentmessung dienen.

In Fig. 3 der Zeichnung ist das Torisonsgelenk 3 in Draufsicht näher dargestellt. Daraus ist ersichtlich, daß der stationäre Teil 2 und das Krafteinleitungsteil 5 als Ringscheibe ausgebildet sind. Die Draufsicht zeigt nur die stationäre Ringscheibe 2, die im wesentlichen genau wie die Krafteinleitungsringscheibe 5 ausgebildet ist. Die Ringscheiben 2, 5 enthalten an ihren Umfangsflächen drei tangentiale Aussparungen 18, deren eine Ausschnittsseite 17 auf die Dreh- oder Mittenachse 7 gerichtet verläuft. Alle drei Ausschnittsseiten 17 sind symmetrisch zur Drehachse 7 angeordnet und bilden einen Winkel von 120° miteinander. An den Ausschnittsseiten 17 sind die Blattfedern 4a, 13, 22 durch eine Schraubverbindung 21 angebracht. Durch die Anordnung der Blattfedern 4a, 13, 22 an den Ringscheiben 2, 5 sind diese in Drehrichtung 20 biegeweich und in axialer Richtung biegesteif.

Im Zentrum der Bohrung 19 ist die Antriebsachse 16 durch das Torsionsgelenk 3 zum Flügelrad 8 nach unten geführt. Symmetrisch zur theoretischen Drehachse 7 sind die beiden Biegebalken 4, 12 an der stationären Ringscheibe 2 befestigt, wobei beide 180° gegenüberliegend angebracht sind. Dabei sind diese so angeordnet, daß sie sich in Drehrichtung 20 jeweils auf den ihm zugeordneten Anschlagflansch 14 abstützen. Bei einer anderen Ausführungsart könnte das Torsionsgelenk auch mit mehr als nur zwei symmetrisch angeordneten Kraftmeßelementen versehen werden. Es könnte z. B. auch drei oder vier symmetrisch zur Drehachse angeordnete Kraftmeßelemente besitzen.

Das Torsionselement könnte aber auch mit zwei oder vier und mehr symmetrisch zur Drehachse angeordneten Federelementen ausgestattet sein, falls dies aus konstruktiven Gegebenheiten notwendig wäre.

Die in Fig. 3 eingezeichnete Antriebswelle 16 stellt den Idealfall dar, bei dem sich der Mittelpunkt der Antriebswelle 16 auf der Drehachse 7 befindet. Dabei besitzen die Krafteinleitungspunkte beider Biegebalken 4, 12 einen Abstand l voneinander und jeweils gleich große Abstände l₁ und l₂ von der Drehachse 7. In der Praxis kommt es aber häufig vor, daß die Antriebswelle 16 durch einseitige Belastung und entsprechendes Lagerspiel um eine Strecke x von der theoretischen Drehachse 7 abweicht. In diesen Fällen sind die Abstände l₁' und l₂' nicht mehr gleich groß, sondern verändern sich jeweils um die Länge x mit ungleichen Vorzeichen, so daß der Gesamtabstand l gleich bleibt.

Die in der Zeichnung beschriebene Vorrichtung arbeitet wie folgt:
Wird bei einem mit konstanter Drehzahl angetriebenen Flügelrad 8 ein Schüttgüterstrom in deren Zentrum gelenkt, so werden durch die Fliehkraft die Schüttgutteilchen nach außen umgelenkt und erzeugen senkrecht zu ihrer Winkelgeschwindigkeit eine sogenannte Corioliskraft. Nach bekannten physikalischen Gesetzmäßigkeiten ist die Corioliskraft proportional zum Massendurchsatz und erzeugt auf den Antrieb des Motors 1 ein Bremsmoment. Da der Antriebsmotor 1 nur mit dem Krafteinleitungsring 5 des Torsionsgelenks 3 fest verbunden ist, wird dieses Bremsmoment auf das Torsionsgelenk 3 übertragen. Dabei will eine Kraft in Drehrichtung 20 den Krafteinleitungsring 5 gegenüber dem stationären Teil 2 verdrehen. Da die Federelemente 4a, 13, 22 in Drehrichtung 20 biegeweich sind, wirkt die Kraft gegen die Kraftmeßelemente 4, 12. Diese erzeugen ein Signal, das der Kraft und damit dem Massendurchfluß proportional ist. Mit Hilfe des Hebelgesetzes werden durch die Hebelarmlängen l₁ und l₂ die Momente errechnet, die ein Maß der Förderstärke des Massengutstromes darstellen. Dies ist auch dann gewährleistet, wenn sich die Antriebswelle seitlich verschiebt, so daß die tatsächliche Drehachse nicht mehr mit der theoretische vorbestimmten Drehachse 7 übereinstimmt, da die Länge l zwischen den symmetrisch angeordneten Kraftmeßelementen 4, 12 unverändert bleibt.

## Patentansprüche

1. Vorrichtung zum Messen eines Massestromes, insbesondere eines Schüttgüterstromes, nach dem Coriolis-Meßprinzip, die ein von einem Motor mit konstanter Drehzahl angetriebenes Flügelrad enthält, auf das der Materialstrom zentral aufgegeben und radial umgeleitet und durch eine Drehmomentmeßeinrichtung das Antriebsdrehmoment gemessen wird, dadurch gekennzeichnet, daß die Drehmomentmeßeinrichtung ein Torsionsgelenk (3) enthält, das so ausgebildet ist, daß zwischen einem stationären Teil (2) und einem Krafteinleitungsteil (5) Federelemente (4a, 13, 22) vorhanden sind, die in Drehrichtung der Antriebsachse biegeweich und in axialer Richtung biegesteif ausgebildet sind, wobei das stationäre Teil (2) und das Krafteinleitungsteil (5) des Torsionsgelenks (3) sich gegeneinander auf mindestens zwei Kraftmeßelementen (4, 12) abstützen, die symmetrisch zur Drehachse (7) angeordnet sind.

2. Vorrichtung zum Messen eines Massestromes nach Patentanspruch 1, dadurch gekennzeichnet, daß das Torsionsgelenk (3) kraftschlüssig zwischen dem Antriebsmotor (1) und dem Flügelrad (8) angeordnet ist und die Antriebswelle (16) koaxial umgibt.

3. Vorrichtung zum Messen eines Massestromes nach Anspruch 1 oder 2, dadurch gekennzeichnet, daß der stationäre Teil (2) des Torsionsgelenks (3) mit dem Gehäuse und der Krafteinleitungsteil (5) mit dem Antriebsmotor (1) verbunden ist, wobei sich der Antriebsmotor (1) mit den mit ihm verbundenen Teilen in vertikaler Richtung auf dem Krafteinleitungsteil (5) abstützt.

4. Vorrichtung zum Messen eines Massestromes nach einem der vorhergehenden Ansprüche, dadurch gekennzeichnet, daß das Torsionsgelenk (3) aus zwei horizontal übereinander angeordneten ringförmigen Teilen (2, 5) besteht, wobei ein Teil (5) den Krafteinleitungsteil und das andere Teil (2) den stationären Teil darstellt und beide Teile (2, 5) mit mindestens zwei Blattfederelementen (4a, 13, 22) verbunden sind, die so an den ringförmigen Teilen (2, 5) angebracht sind, daß das Torsionsgelenk (3) in Drehrichtung (20) biegeweich und in axialer und vertikaler Richtung biegesteif sind.

5. Vorrichtung zum Messen eines Massestromes nach einem der vorhergehenden Ansprüche, dadurch gekennzeichnet, daß zwischen den beiden ringförmigen Teilen (2, 5) die Kraftmeßelemente (4, 12) angeordnet sind, wobei diese jeweils mit einem Teil fest verbunden sind und sich in Drehrichtung (20) auf den anderen Teil abstützen.

6. Vorrichtung zum Messen eines Massestromes nach einem der vorhergehenden Ansprüche, dadurch gekennzeichnet, daß die beiden Kraftmeßelemente (4, 12) so angeordnet sind, daß deren Krafteinleitungspunkte 180° zueinander versetzt und deren horizontale Abstände von der Drehachse (7) gleich weit entfernt sind.

7. Vorrichtung zum Messen eines Massestromes nach einem der vorhergehenden Ansprüche, dadurch gekennzeichnet, daß die Federelemente aus mindestens zwei Blattfedern (4a, 13, 22) bestehen, die symmetrisch zur Drehachse (7) angeordnet sind.

## Claims

1. Device for measuring a mass flow, in particular a bulk material flow, using the Coriolis measuring principle, comprising an impeller wheel, which is driven at constant speed by a motor and onto which the material flow is centrally charged and radially redirected and the input torque is measured by means of a torque-measuring device, characterized in that the torque-measuring device comprises a torsion joint (3) which is constructed in such a way that spring elements (4a, 13, 22), which are non-rigid in the direction of rotation of the drive shaft and rigid in an axial direction, are provided between a stationary part (2) and a force introduction part (5), the stationary part (2) and the force introduction part (5) of the torsion joint (3) being supported relative to one another on at least two force-measuring elements (4, 12) which are arranged symmetrically relative to the axis of rotation (7).

2. Device for measuring a mass flow according to claim 1, characterized in that the torsion joint (3) is disposed in a friction-locked manner between the drive motor (1) and the impeller wheel (8) and coaxially surrounds the drive shaft (16).

3. Device for measuring a mass flow according to claim 1 or 2, characterized in that the stationary part (2) of the torsion joint (3) is connected to the housing and the force introduction part (5) is connected to the drive motor (1), the drive motor (1) with the parts connected thereto being supported in a vertical direction on the force introduction part (5).

4. Device for measuring a mass flow according to one of the preceding claims, characterized in that the torsion joint (3) comprises two annular parts (2, 5) disposed horizontally one above the other, one part (5) being the force introduction part and the other part (2) being the stationary part and both parts (2, 5) being connected to at least two leaf spring elements (4a, 13, 22), which are attached to the annular parts (2, 5) in such a way that the torsion joint (3) is non-rigid in the direction of rotation (20) and rigid in an axial and vertical direction.

5. Device for measuring a mass flow according to one of the preceding claims, characterized in that the force-measuring elements (4, 12) are disposed between the two annular parts (2, 5), said force-measuring elements each being firmly connected to one part and being supported in the direction of rotation (20) against the other part.

6. Device for measuring a mass flow according to one of the preceding claims, characterized in that the two force-measuring elements (4, 12) are disposed in such a way that their force introduction points are offset by 180° relative to one another and their horizontal clearances are equally remote from the axis of rotation (7).

7. Device for measuring a mass flow according to one of the preceding claims, characterized in that the spring elements comprise at least two leaf springs (4a, 13, 22) which are arranged symmetrically relative to the axis of rotation (7).

## Revendications

1. Dispositif de mesure d'un débit massique, en particulier du débit de produits en vrac, d'après le principe de mesure de Coriolis, qui comporte une roue à ailettes entraînée par un moteur à vitesse de rotation constante, sur laquelle le flux de matières est chargé centralement et dévié radialement et le couple d'entraînement est mesuré par un dispositif de mesure de couple, caractérisé en ce que le dispositif de mesure de couple contient une articulation de torsion (3), qui est conçue de manière qu'entre une partie fixe (2) et une partie de transmission de force (5) sont prévus des éléments à ressort (4a, 13, 22), qui sont souples en flexion dans le sens de rotation de l'axe d'entraînement et sont rigides en flexion dans la direction axiale, la partie fixe (2) et la partie de transmission de force (5) de l'articulation de torsion (3) prenant appui l'une contre l'autre sur au moins deux éléments de mesure de force (4, 12), qui sont symétriques par rapport à l'axe de rotation (7).

2. Dispositif de mesure d'un débit massique selon la revendication 1, caractérisé en ce que l'articulation de torsion (3) est placée par force entre le moteur d'entraînement (1) et la roue à ailettes (8) et entoure coaxialement l'arbre d'entraînement (16).

3. Dispositif de mesure d'un débit massique selon les revendications 1 ou 2, caractérisé en ce que la partie fixe (2) de l'articulation de torsion (3) est reliée au carter et la partie de transmission de force (5) est reliée au moteur d'entraînement (1), le moteur d'entraînement (1) prenant appui, par les parties qui lui sont reliées, en direction verticale, sur la partie de transmission de force (5).

4. Dispositif de mesure d'un débit massique selon l'une des revendications précédentes, caractérisé en ce que l'articulation de torsion (3) est constituée de deux parties annulaires (2, 5) superposées horizontalement, une partie (5) constituant la partie de transmission de force et l'autre partie (2), la partie fixe, et les deux parties (2, 5) étant reliées avec au moins deux éléments à ressort à lame (4a, 13, 22), qui sont fixés sur les parties annulaires (2, 5) de manière que l'articulation de torsion (3) soit souple en flexion dans le sans de rotation (20) et rigide en flexion, dans la direction axiale et la direction verticale.

5. Dispositif de mesure d'un débit massique selon l'une des revendications précédentes, caractérisé en ce qu'entre les deux parties annulaires (2, 5) sont prévus des éléments de mesure de force (4, 12), chacun de ceux-ci étant relié fixement à une partie et prenant appui dans le sens de rotation (20), sur l'autre partie.

6. Dispositif de mesure d'un débit massique selon l'une des revendications précédentes, caractérisé en ce que les deux éléments de mesure de force (4, 12) sont disposés de manière que leurs points de transmission de force soient décalés de 180° l'un par rapport à l'autre et de manière qu'ils soient à égale distance horizontale de l'axe de rotation (7).

7. Dispositif de mesure d'un débit massique selon l'une des revendications précédentes, caractérisé en ce que les éléments à ressort sont constitués d'au moins deux ressorts à lame (4a, 13, 22), qui sont symétriques par rapport à l'axe de rotation (7).
